# EUROPÄISCHE PATENTSCHRIFT

(11) **EP 3 181 418 B1**
(45) Veröffentlichungstag und Bekanntmachung des Hinweises auf die Patenterteilung: **27.02.2019**
(21) Anmeldenummer: 16002398.2
(22) Anmeldetag: 14.11.2016
(51) Int. Cl.: B60T 15/04

(54) **PNEUMATISCHES REGELVENTIL**
PNEUMATIC CONTROL VALVE
SOUPAPE DE RÉGULATION PNEUMATIQUE

(30) Priorität: 19.12.2015 DE 102015016663
(43) Veröffentlichungstag der Anmeldung: 21.06.2017
(73) Patentinhaber: WABCO GmbH, 30432 Hannover (DE)
(72) Erfinder: Beier, Peter, 31515 Wunstorf (DE); Elze, Petra, 30455 Hannover (DE); Fabian, Alexander, 31224 Peine (DE); Homann, Sven, 30900 Wedemark (DE); Hörstmann, Jan, 31275 Lehrte (DE); Martens, Bettina, 30161 Hannover (DE); Martini, Gerhard, 30989 Gehrden (DE); Riediger-Janisch, Karl-Heinz, 30455 Hannover (DE)

(56) Entgegenhaltungen:
- EP-A1- 0 336 111
- DE-A1-102009 032 313
- DE-A1-102013 015 973
- DE-B- 1 269 439
- GB-B- 2 121 496

## Beschreibung

Die Erfindung betrifft ein pneumatisches Regelventil, insbesondere einen Zwei-Kreis-Bremswertgeber in einem Druckluftbremssystem eines Fahrzeugs zum Ausregeln eines einer gewünschten Bremswirkung entsprechenden Bremsdrucks, gemäß dem Oberbegriff des Patentanspruchs 1.

Ein derartiges Regelventil ist aus der DE 10 2013 015 973 A1 bekannt. Ein anderes Regelventil ist aus der GB 2 181 803 A bekannt. Bei diesem Regelventil ist der erste Steuerkolben mittels eines Sicherungsringes in einem Gehäuseoberteil eines zweiteiligen Gehäuses, bestehend aus dem Gehäuseoberteil und einem Gehäuseunterteil, gesichert, und in dem ersten Ventilkolben ist ein druckfederbeaufschlagter Stößelkolben angeordnet, der in dem ersten Ventilkolben ebenfalls mittels eines Sicherungsringes gesichert ist. Des Weiteren ist das druckfederbeaufschlagte Plattenventil mit seinen Einzelteilen in der zweiten Aufnahme des Gehäuseoberteils ebenfalls mittels eines Sicherungsringes gesichert, und schließlich ist das zweite Plattenventil mit seinen Bauelementen in eine Aufnahme eingesetzt, die von der dem Gehäuseoberteil abgewandten Seite des Gehäuseunterteils aus zugänglich ist und dort ebenfalls mit einem Sicherungsring gesichert ist. Zwischen dem ersten Ventilkolben und einem gehäusefesten ringförmigen Dichtsitz ist eine Prallplatte angeordnet, die wiederum mittels eines Sicherungsrings in Position gehalten wird. Eine ähnliche Prallplatte ist zwischen dem zweiten Steuerkolben und einem zweiten gehäusefesten, ringförmigen Dichtsitz angeordnet und mittels Schrauben in ihrer Lage gesichert. Das Gehäuseoberteil und das Gehäuseunterteil sind mit einer Mehrzahl koaxialer Aufnahmen und Bohrungen mit unterschiedlichen sowie abgestuften Durchmessern versehen, die bei deren Herstellung alle mechanisch bearbeitet werden müssen, ebenso wie die Nuten für die verschiedenen Sicherungsringe. Dieses bekannte Regelventil ist dementsprechend kostspielig in der Herstellung und mit Montageschwierigkeiten verbunden, da insbesondere die große Anzahl an Sicherungsringen nur mit Spezialwerkzeugen eingesetzt werden können und die Gefahr besteht, dass Bearbeitungsspäne in diesen Bereichen verbleiben und die Funktion des Regelventils beeinträchtigen und/oder einen vorzeitigen Verschleiß herbeiführen.

Vor diesem Hintergrund liegt der Erfindung die Aufgabe zugrunde, ein Regelventil, insbesondere einen Zwei-Kreis-Bremswertgeber in einem Druckluftbremssystem eines Fahrzeugs der eingangs erwähnten Art vorzuschlagen, das einen verringerten Bauraum aufweist, mit einer geringeren Bauteilanzahl auskommt, zu einer vereinfachten Montage mit Verzicht auf kritische Montageprozesse führt und sich wenigstens teilweise mit Metall-Druckgussteilen und/oder Kunststoff-Spritzgussteilen herstellen lässt.

Diese Aufgabe wird durch ein Regelventil mit den Merkmalen des Hauptanspruchs gelöst. Vorteilhafte Weiterbildungen der Erfindung sind in den Unteransprüchen definiert. Die letzten beiden Ansprüche betreffen ein Fahrzeug mit einem solchen Regelventil sowie eine vorteilhafte Verwendung dieses Regelventils.

Demnach geht die Erfindung aus von einem Regelventil, insbesondere von einem Zwei-Kreis-Bremswertgeber in einem Druckluftbremssystem eines Fahrzeugs zum Ausregeln eines einer gewünschten Bremswirkung entsprechenden Bremsdrucks, aufweisend ein in einem oberen und einem mittleren Gehäusebereich eines Gehäuses angeordnetes erstes Ventilsystem, mit einem pedalbetätigbaren oder elektrisch betätigbaren ersten Ventilkolben sowie mit einem damit zusammenwirkenden ersten ringförmigen Plattenventil, und aufweisend ein in einem unteren Gehäusebereich des Gehäuses angeordnetes zweites Ventilsystem, mit einem koaxial angeordneten, pneumatisch und/oder mechanisch durch das erste Ventilsystem betätigbaren zweiten Ventilkolben, sowie mit einem damit zusammenwirkenden zweiten ringförmigen Plattenventil, wobei der obere Gehäusebereich einen vom oberen Gehäusebereich aus zugänglichen zylindrischen Raum zur Aufnahme des ersten Ventilkolbens, der mittlere Gehäusebereich einen vom unteren Gehäusebereich aus zugänglichen Raum zur Aufnahme des ersten Plattenventils und der untere Gehäusebereich einen vom unteren Gehäusebereich aus zugänglichen Raum zur Aufnahme des zweiten Ventilkolbens und eine Vorrichtung zur Aufnahme des zweiten Plattenventils aufweist.

Bei diesem Regelventil ist gemäß der Erfindung zusätzlich vorgesehen, dass das Gehäuse einstückig und materialeinheitlich aus dem oberen Gehäusebereich, dem mittleren Gehäusebereich, dem unteren Gehäusebereich und einem im mittleren Gehäusebereich gehäusefest angeordneten ringförmigen Dichtsitz besteht, dass der obere Gehäusebereich durch einen Gehäusedeckel und der untere Gehäusebereich durch ein Abschlusselement verschlossen sind, und dass wenigstens das Abschlusselement mit einem Dichtsitzträger und dem dazwischen angeordneten zweiten Plattenventil zu einer vormontierten, in den Raum im unteren Gehäusebereich einsetzbaren Baueinheit zusammengefügt sind.

Dieser konstruktive Aufbau des Regelventils ermöglicht eine sehr einfache Montage desselben, da die Elemente dieses Regelventils außerhalb seines Gehäuses sehr viel einfacher zusammenbaubar sind als in dem engen Raum innerhalb des Gehäuses. Auch die Demontage eines derartig ausgebildeten Regelventils ist vereinfacht, was sehr vorteilhaft ist, wenn das Regelventil in einer Werkstatt repariert werden soll.

Gemäß einer vorteilhaften Ausführungsform kann die in den Raum im unteren Gehäusebereich einsetzbare Baueinheit zusätzlich mit dem zweiten Ventilkolben zu einer erweiterten vormontierten Baueinheit zusammengefügt sein.

Eine noch stärkere Reduzierung der Herstellkosten ergibt sich dann, wenn die in den Raum im unteren Gehäusebereich einsetzbare Baueinheit zusätzlich mit einem Schalldämpfer zu einer noch umfangreicher vormontierten Baueinheit zusammengefügt ist.

Die Elemente der verschiedenen vormontierten Baueinheiten können mittels Rastverbindungen zusammengefügt sein, um als vormontierte Baueinheit handhabbar zu sein. Auf ähnliche Weise lassen sich auch das Abschlusselement am unteren Gehäusebereich und/oder der Gehäusedeckel am oberen Gehäusebereich mittels Rastverbindungen befestigen.

Vorzugsweise kann wenigstens die Rastverbindung für das Abschlusselement am unteren Gehäusebereich als Bajonettverschluss ausgebildet sein, die sich so dimensionieren lässt, dass sie auch höheren Drücken standhält.

Da das Abschlusselement im unteren Gehäusebereich zusammen mit dem Dichtsitzträger als Aufnahme für das zweite Plattenventil dient und dementsprechend ein Druckraum in diesen Bauelementen mit einem Druckluftauslass im unteren Gehäusebereich fluchten muss, kann eine entsprechende Positionierung des Abschlusselements gegenüber dem unteren Gehäusebereich mittels eines geeignet geformten Blattfederelements erfolgen, welches zugleich eine Verdrehsicherung bildet. Zu diesem Zweck kann das Blattfederelement das Abschlusselement bereichsweise umgreifen, mit seinen radial nach innen hakenförmig abgebogenen Federenden in Schlitze im Abschlusselement und mit einem mittleren, radial nach außen vorstehenden Positioniervorsprung federnd in eine entsprechende Positionierausnehmung im unteren Gehäusebereich eingreifen. Beim Einfügen der vormontierten Baueinheit in die Aufnahme im unteren Gehäusebereich wird das Blattfederelement leicht verformt, so dass der Positioniervorsprung in die Positionierausnehmung einrasten kann und die vormontierte Baueinheit gegen ein Verdrehen in der vorgeschriebenen Position sichert.

Schließlich kann vorgesehen sein, dass der erste Ventilkolben mit einer oberen Druckplatte, einer unteren Druckplatte und einem dazwischen angeordneten Ventilfederpaket mittels einer diese verbindenden Spannschraube zu einer vormontierten, in den zylindrischen Raum des oberen Gehäusebereichs einsetzbaren Baueinheit zusammenmontiert ist.

Die vorerwähnte Aufgabe wird ferner durch ein Fahrzeug, insbesondere ein Nutzfahrzeug, gelöst, welches durch ein Regelventil der vorstehend definierten Art gekennzeichnet ist.

Des Weiteren wird die Aufgabe auch durch die Verwendung des erfindungsgemäßen Regelventils in einem Druckluftbremssystem eines Fahrzeugs gelöst.

Die Erfindung wird nachstehend anhand eines in der Zeichnung dargestellten Ausführungsbeispiels weiter erläutert. In der Zeichnung zeigt
Fig. 1 eine schematische Längsschnittdarstellung eines gemäß der Erfindung ausgebildeten Regelventils,
Fig. 2 eine vergrößerte Längsschnittdarstellung des unteren Gehäusebereichs mit dem zweiten Ventilsystem des Regelventils gemäß Fig. 1,
Fig. 3 eine perspektivische Ansicht eines mit einem Abschlusselement verbindbaren Dichtsitzträgers,
Fig. 4 eine perspektivische Ansicht des in den unteren Gehäusebereich einsetzbaren Abschlusselements, und
Fig. 5 eine perspektivische Ansicht eines an das Abschlusselement ansetzbaren Blattfederelements.

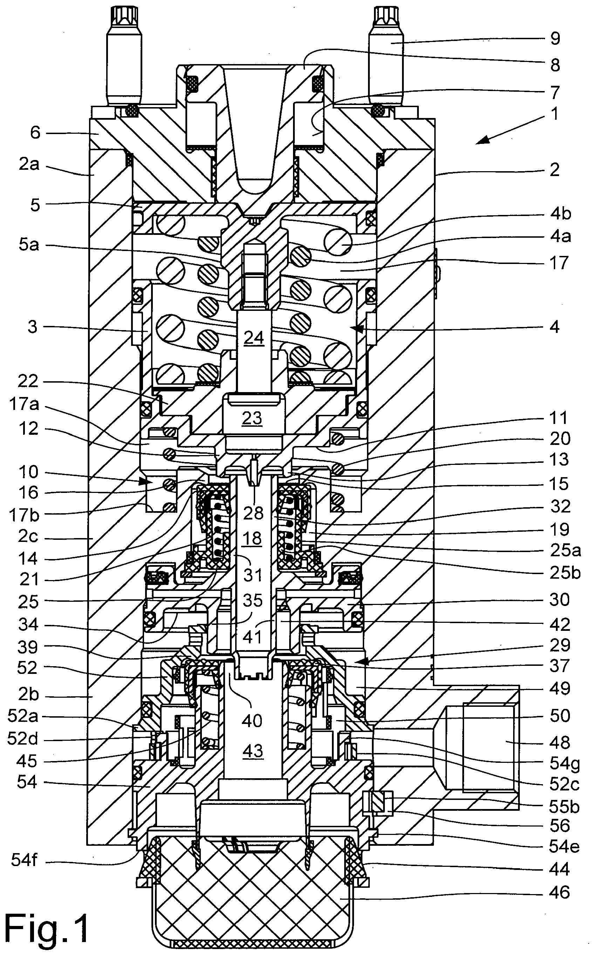

Das in Fig. 1 dargestellte pneumatische Regelventil 1 stimmt hinsichtlich seiner Funktionsweise im Wesentlichen mit der des in der GB 2 181 803 A beschriebenen Regelventils überein. Diese bekannte Funktionsweise ist nicht Teil der vorliegenden Erfindung und wird daher im Einzelnen nicht beschrieben.

Ein ähnliches Steuerventil ist auch in der DE 33 43 172 C2 offenbart, und die aus diesen beiden Druckschriften entnehmbare Funktionsweise des in Fig. 1 dargestellten Regelventils lässt sich aus diesen beiden Druckschriften entnehmen, deren diesbezüglicher Inhalt hier vollständig zum Gegenstand der Offenbarung gemacht ist.

Das in den Figuren dargestellte Regelventil 1 weist ein aus einem oberen Gehäusebereich 2a, einem mittleren Gehäusebereich 2c und einem unteren Gehäusebereich 2b bestehendes Gehäuse 2 auf, das einstückig und materialeinheitlich zusammen mit einem gehäusefesten, unverschiebbaren, ringförmigen und im mittleren Gehäusebereich 2c angeordneten Dichtsitz 16 als Kunststoff-Spritzgussteil oder als Metall-Druckgussteil hergestellt sein kann.

Ein Raum 17, 17a im oberen Gehäusebereich 2a dient zur Aufnahme einer vormontierten Baueinheit bestehend aus einer oberen Druckplatte 5 sowie einem zwischen der oberen Druckplatte 5 und einer in einen ersten Ventilkolben 3 eingesetzten unteren Druckplatte 22 angeordneten Druckfederpaket 4, welches eine erste Druckfeder 4a aufweist, die radial innerhalb einer zweiten Druckfeder 4b koaxial angeordnet ist. Zu diesem Zweck weist die obere Druckplatte 5 einen mit einem Innengewinde versehenen axialen Vorsprung 5a auf, in den eine die untere Druckplatte 22 durchgreifende Spannschraube 24 geschraubt ist. Die untere Druckplatte 22 und der erste Ventilkolben 3 sind zum Bilden der vormontierten Baueinheit auf geeignete Weise, beispielsweise durch Kleben, Verschrauben, mittels eines Presssitzes oder einer Rastverbindung miteinander verbunden.

Bei der Nutzung einer Rastverbindung zwischen der unteren Druckplatte 22 und dem ersten Ventilkolben 3 kann vorteilhaft vorgesehen sein, dass diese Rastverbindung ein vorbestimmtes axiales Spiel aufweist, wodurch die untere Druckplatte 22 mittels der Spannschraube 24 in Richtung zur oberen Druckplatte 5 verschiebbar ist, ohne dass auf einen Zusammenhalt diese beiden Bauteile 3, 22 verzichtet werden muss. Dies ermöglicht mittels der Spannschraube 24 zusätzlich die Einstellung der axialen Vorspannung der beiden Druckfedern 4a, 4b sowie insbesondere den Eingriffspunkt der radial inneren Druckfeder 4a beim Betätigen eines Stößelkolbens 8.

Das dargestellte Ausführungsbeispiel zeigt einen Gehäusedeckel 6, der eine axiale Führung in Form einer stufig abgesetzten Bohrung 7 für den Stößelkolben 8 aufweist und mit dem Gehäuse 2 mittels Befestigungsschrauben 9 verbunden ist. Es besteht auch die Möglichkeit, den Gehäusedeckel mittels einer bekannten, jedoch nicht dargestellten Rastverbindung, insbesondere einer Bajonettverbindung, am oberen Gehäusebereich 2a zu befestigen.

Die vormontierte Baueinheit bestehend aus den genannten Elementen mit den Bezugszeichen 3, 4, 5, 22, 24 wird nach dem Einsetzen einer Gegendruckfeder 20 in den Raum 17, 17a des Gehäuses 2 ebenfalls in diesen eingeführt und mittels des Gehäusedeckels 6 im oberen Gehäusebereich 2a gehalten. Die bereits erwähnte Gegendruckfeder 20 stützt sich mit einem Ende an einem Gehäuseabsatz 17b im mittleren Gehäusebereich 2c und mit ihrem anderen Ende am ersten Ventilkolben 3 ab. Der erwähnte Raum 17a steht über einen nicht dargestellten Auslass mit einem ersten Kreis eines Zwei-Kreis-Druckluftbremssystems eines Fahrzeugs in Verbindung.

Der Gehäuseabsatz 17b im mittleren Gehäusebereich 2c geht radial innen in einen ersten, unverschiebbaren, ringförmigen Dichtsitz 16 über, der mit einer radialen Dichtfläche 15 eines ersten ringförmigen Plattenventils 14 zusammenwirkt.

Am ersten Ventilkolben 3 ist ein zylindrischer Fortsatz 12 ausgebildet, der axial in einem ringförmigen Dichtsitz 13 endet. Dieser ringförmige Dichtsitz 13 hat einen kleineren Durchmesser als der gehäusefeste ringförmige Dichtsitz 16 und wirkt ebenfalls mit der radialen Dichtfläche 15 des ersten ringförmigen Plattenventils 14 zusammen.

Das erste ringförmige Plattenventil 14 ist gegen die Rückstellkraft einer dritten Druckfeder 21 axial verschiebbar sowie abgedichtet auf einem Träger 25 angeordnet. Der Träger weist eine radial äußere hohlzylindrische Führungswand 25a sowie eine radial innere hohlzylindrische Führungswand 25b auf, zwischen denen die dritte Druckfeder 21 aufgenommen ist. Der Träger 25 dient des Weiteren mittels seiner radial inneren hohlzylindrischen Führungswand 25b zur Führung eines ersten, axial in Richtung zum Stößelkolben 8 ragenden Rohres 31. Dieses erste Rohr 31 ist an einem zweiten Ventilkolben 30 einstückig ausgebildet, welcher ein Teil eines zweiten Ventilsystems 29 ist und in einem zylindrischen Raum 49 im unteren Gehäusebereich 2b angeordnet ist.

Das mit seinem freien Ende zum Stößelkolben 8 weisende erste Rohr 31 und ein in die entgegengesetzte Richtung weisendes zweites Rohr 41 am zweiten Ventilkolben 30 bilden radial innen zusammen einen Entlüftungsdurchlass 18 für den Raum 17a im oberen Gehäusebereich 2a, in welchem die Gegendruckfeder 20 angeordnet ist.

Ein im mittleren Gehäusebereich 2c um das erste, ringförmige Plattenventil 14 herum gebildeter Ringraum 19 ist über einen nicht dargestellten Druckeinlass mit einem ebenfalls nicht dargestellten Druckluftbehälter verbunden.

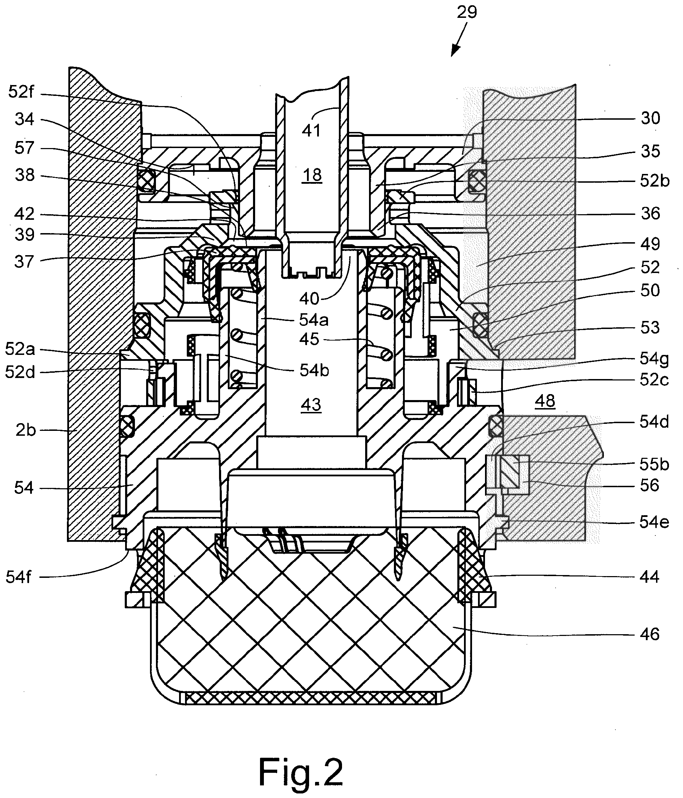

Wie die vergrößerte Darstellung des Regelventils 1 in Fig. 2 detailliert zeigt, ist koaxial und beabstandet zum ersten Ventilsystem 10 ein zweites Ventilsystem 29 angeordnet, welches sich pneumatisch durch das erste Ventilsystem 10 betätigen lässt. Das zweite Ventilsystem 29 weist den zweiten Ventilkolben 30 auf, aus dessen Oberseite das erste Rohr 31 herausragt. Dieses erste Rohr 31 ist durch das ringförmige Plattenventil 14 des ersten Ventilsystems 10 hindurch bis in den Bereich des ringförmigen Ventilsitzes 13, wie in Fig. 1 dargestellt, geführt.

Wie insbesondere Fig. 2 zeigt, ist an der Unterseite 34 des zweiten Ventilkolbens 30 ein zylindrischer Fortsatz 35 mit einem ringförmigen Dichtsitz 36 ausgebildet und konzentrisch dazu ein zweites Rohr 41 angeordnet. Das erste Rohr 31 und das zweite Rohr 41 können in den zweiten Ventilkolben 30 eingesetzt sein oder mit diesem, wie dargestellt, materialeinheitlich und einstückig hergestellt sein. Radial zwischen dem zylindrischer Fortsatz 35 und dem zweiten Rohr 41 ist ein erster Ringraum 42 gebildet.

Der zwischen dem zweiten Rohr 41 und dem zweiten ringförmigen Plattenventil 37 gebildete erste Ringraum 42 dient als Entlüftungsdurchlass für das zweite Ventilsystem 29, der am Ende des zweiten Rohres 41 über einen ringförmigen Entlüftungsdurchlass 40 im zweiten ringförmigen Plattenventil 37 in einen gemeinsamen Entlüftungsdurchlass 43 für das erste Ventilsystem 10 und das zweite Ventilsystem 29 übergeht.

Konzentrisch zum ringförmigen Dichtsitz 36 des zweiten Ventilkolbens 30 ist ein weiterer ringförmiger Dichtsitz 39 größeren Durchmessers angeordnet, der ebenfalls mit der radialen Dichtfläche 38 des zweiten ringförmigen Plattenventils 37 zusammenwirkt. Dieser Dichtsitz 39 ist Teil eines in den unteren Gehäusebereich 2b eingeschobenen Dichtsitzträgers 52, der sich mit einem radial außen angeordneten Bund 52a an einem radial nach innen weisenden Gehäuseabsatz 53 abstützt und eine definierte Position im unteren Gehäusebereich 2b einnimmt. Zwischen dem unteren Gehäusebereich 2b und dem Dichtsitzträger 52 ist ein zweiter Ringraum 49 gebildet, der in der in den Figuren 1 und 2 gezeigten Stellung über den erster Ringraum 42, den Entlüftungsdurchlass 40, den gemeinsamen Entlüftungsdurchlass 43 und den Schalldämpfer 46 mit der Umgebung in Verbindung steht.

Das zweite ringförmige Plattenventil 37 ist durch eine vierte Druckfeder 45 mit einer Schließkraft beaufschlagt, wodurch die radiale Dichtfläche 38 des zweiten ringförmigen Plattenventils 37 in der in Figuren 1 und 2 gezeigten Stellung gegen den zweiten unverschiebbaren Dichtsitz 39 gedrückt wird. Das zweite ringförmige Plattenventil 37 ist abgedichtet auf einer ersten zylindrischen Führungswand 54a und auf einer dazu konzentrischen zweiten zylindrischen Führungswand 54b geführt, wobei die vierte Druckfeder 45 im radialen Zwischenraum zwischen diesen beiden Führungswänden 54a, 54b angeordnet ist. Die beiden hohlzylindrischen Führungswände 54a und 54b sind Bestandteil eines Abschlusselements 54, das in den unteren Gehäusebereich 2b eingesetzt ist und diesen axial abschließt. Der Schalldämpfer 46 ist an dem Abschlusselement 54 mittels in entsprechende Ausnehmungen 54f des Abschlusselements 54 eingreifenden Rastnasen 44 befestigt.

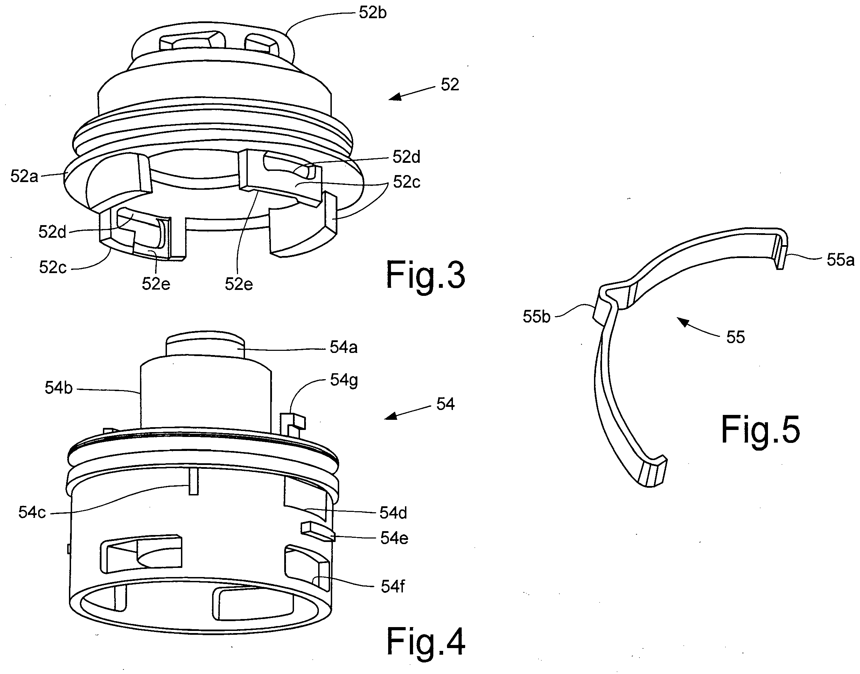

Wie aus Fig. 2 in Verbindung mit den Figuren 3 bis 5 ersichtlich ist, weist der Dichtsitzträger 52 einen oberen, durchbrochenen, zylindrischen Fortsatz 52b mit einem in Fig. 2 dargestellten, radial nach innen gerichteten Umfangsbord 52f sowie durchbrochene untere Fortsätze 52c mit Öffnungen 52d und Ausnehmungen 52e auf. Am zylindrischen Fortsatz 35 des zweiten Ventilkolbens 30 können schematisch dargestellte, federnde Rastnasen 57 angeordnet sein, die den Umfangsbord 52f untergreifen und eine Bewegung des zweiten Ventilkolbens 30 in Richtung zum Dichtsitzträger 52 zulassen, jedoch ein Abrutschen des zweiten Ventilkolbens 30 vom Dichtsitzträger 52 verhindern.

Der Dichtsitzträger 52 lässt sich mit dem in Fig. 4 dargestellten Abschlusselement 54 zusammenfügen, indem am Abschlusselement 54 angeordnete Rasthaken 54g entlang Ausnehmungen 52e des Dichtsitzträgers 52 geschoben und in die dafür vorgesehenen Öffnungen 52d in den unteren Fortsätzen 52c des Dichtsitzträgers 52 eingerastet werden.

Das Abschlusselement 54 selbst lässt sich mittels Bajonettvorsprüngen 54e mit dem unteren Gehäusebereich 2b verrasten.

Die in Fig. 3 ersichtlichen umfangsbezogenen Zwischenräume zwischen den unteren Fortsätzen 52c am Dichtsitzträger 52 dienen zum Durchlass von durch einen Drucklufteinlass 48 zugeführter Druckluft zu dem dritten Ringraum 50. Daher muss einer der Zwischenräume zwischen den unteren Fortsätzen 52c genau gegenüber dem Drucklufteinlass 48 positioniert sein. Zu diesem Zweck ist ein in Fig. 5 dargestelltes Blattfederelement 55 vorgesehen, dessen radial nach innen abgebogenen hakenförmigen Federenden 55a in entsprechende Schlitze 54c im Abschlusselement 54 eingreifen, und dessen mittlerer, radial nach außen vorstehender Positioniervorsprung 55b federnd in eine entsprechende Positionierausnehmung 56 im unteren Gehäusebereich 2b eingreift. Damit der Positioniervorsprung 55b bei der Montage einfedern kann, ist am Abschlusselement 54 ein entsprechender Ausschnitt 54d beziehungsweise eine diesbezügliche Vertiefung vorgesehen.

Es ergibt sich somit, dass sich eine vormontierte Baueinheit vor dem Einschieben in den unteren Gehäusebereich 2b zusammenfügen lässt, indem das zweite Plattenventil 37 auf und die vierte Druckfeder 45 in den radialen Zwischenraum zwischen den hohlzylindrischen Führungswänden 54a, 54b gesetzt, der Dichtsitzträger 52 und das Abschlusselement 54 miteinander verrastet werden, und der zylindrische Fortsatz 35 des zweiten Ventilkolbens 30 in den oberen zylindrischen Fortsatz 52b des Dichtsitzträgers 52 eingeschoben sowie gegebenenfalls mittels der Rastnasen 57 verrastet wird. Bevor diese vormontierte Baueinheit aus den genannten Elementen mit den Bezugsziffern 30, 37, 52 und 54 in den unteren Gehäusebereich 2b eingeschoben werden kann, muss noch das erste Plattenventil 14 in dem Raum 19 im mittleren Gehäusebereich 2c montiert werden, wenn es nicht durch eine Montageverbindung mit dem oberen Rohr 31 und damit mit den genannten Elementen 30, 37, 52, 54 zu einer erweiterten Baueinheit zusammengefügt wird. In diesem Fall muss allerdings Vorsorge dafür getroffen werden, dass der Träger 25 des ersten Plattenventils 14 dann nach der Montage fest und abgedichtet mit dem mittleren Gehäusebereich 2c verbunden ist.

Die kreuzweise schraffierten Elemente des erfindungsgemäßen Regelventils 1 können aus einem thermoplastischen Kunststoff und/oder einem Elastomer bestehen und lassen sich dementsprechend als Spritzgussteile herstellen, die keiner zusätzlichen, mechanischen Bearbeitung bedürfen. Auch die schräg schraffierten, vorzugsweise als Metall-Druckguss-Teile herstellbaren Elemente des erfindungsgemäßen Regelventils 1 bedürfen keiner oder nur einer geringen mechanischen Bearbeitung, so dass sich das vorgestellte Regelventil 1 aus wenigen Teilen kostengünstig herstellen lässt und aufgrund der vormontierten Baueinheiten kostengünstig zusammensetzen lässt, wodurch eine bedeutende Kostenersparnis bei der Herstellung eines Regelventils 1 erzielt wird.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugszeichenliste (Bestandteil der Beschreibung)

- 1: Regelventil
- 2: Gehäuse
- 2a: Oberer Gehäusebereich
- 2b: Unterer Gehäusebereich
- 2c: Mittlerer Gehäusebereich
- 3: Erster Ventilkolben
- 4: Druckfederpaket
- 4a: Erste, radial innere Druckfeder des Druckfederpakets 4
- 4b: Zweite, radial äußere Druckfeder des Druckfederpakets 4
- 5: Obere Druckplatte
- 5a: Axialer Vorsprung an der Druckplatte 5
- 6: Gehäusedeckel
- 7: Abgesetzte Bohrung im Gehäusedeckel
- 8: Stößelkolben
- 9: Befestigungsschraube
- 10: Erstes Ventilsystem
- 11: Unterseite des ersten Ventilkolbens 10
- 12: Zylindrischer Fortsatz am ersten Ventilkolben 3
- 13: Ringförmiger Dichtsitz
- 14: Erstes ringförmiges Plattenventil
- 15: Radiale Dichtfläche
- 16: Erster unverschiebbarer, ringförmiger Dichtsitz
- 17: Erster Raum zur Aufnahme der ersten und zweiten Druckfeder 4a, 4b
- 17a: Raum unter dem ersten Ventilkolben 10, Aufnahme
- 17b: Gehäuseabsatz
- 18: Entlüftungsdurchlass
- 19: Zweiter Raum
- 20: Gegendruckfeder
- 21: Dritte Druckfeder
- 22: Untere Druckplatte
- 23: Zentrische Bohrung in der unteren Druckplatte 23
- 24: Spannschraube
- 25: Träger für das erste Plattenventil 14
- 25a: Erste, radial innere zylindrische Führungswand
- 25b: Zweite, radial äußere zylindrische Führungswand
- 28: Verbindungsbohrung
- 29: Zweites Ventilsystem
- 30: Zweiter Ventilkolben
- 31: Erstes Rohr am zweiten Ventilkolben 30
- 32: Ende des ersten Rohres 31
- 34: Unterseite des zweiten Ventilkolbens
- 35: Zylindrischer Fortsatz am zweiten Ventilkolben 30
- 36: Ringförmiger Dichtsitz am zweiten Ventilkolben 30
- 37: Zweites ringförmiges Plattenventil
- 38: Radiale Dichtfläche
- 39: Zweiter unverschiebbarer, ringförmiger Dichtsitz
- 40: Zentrischer Entlüftungsdurchlass
- 41: Zweites Rohr am zweiten Ventilkolben 30
- 42: Erster Ringraum, Raum
- 43: Gemeinsamer Entlüftungsdurchlass
- 44: Rastnasen
- 45: Vierte Druckfeder
- 46: Schalldämpfer
- 48: Drucklufteinlass
- 49: Zweiter Ringraum, Raum
- 50: Dritter Ringraum, Raum
- 52: Dichtsitzträger
- 52a: Bund
- 52b: Oberer zylindrischer Fortsatz
- 52c: Untere Fortsätze
- 52d: Öffnungen für Rasthaken 54g
- 52e: Ausnehmungen
- 52f: Umfangsbord
- 53: Gehäuseabsatz
- 54: Abschlusselement
- 54a: Führungswand
- 54b: Führungswand
- 54c: Schlitz zur Aufnahme abgebogener Federenden 55a
- 54d: Ausschnitt
- 54e: Bajonettvorsprung
- 54f: Öffnungen für Rastnasen 44
- 54g: Rasthaken
- 55: Blattfederelement
- 55a: Abgebogene Federenden
- 55b: Positioniervorsprung
- 56: Positionierausnehmung im unteren Gehäusebereich 2b
- 57: Federnde Rastnasen am zylindrischen Fortsatz 35

## Patentansprüche

1. Pneumatisches Regelventil (1), insbesondere Zwei-Kreis-Bremswertgeber in einem Druckluftbremssystem eines Fahrzeugs zum Ausregeln eines einer gewünschten Bremswirkung entsprechenden Bremsdrucks, aufweisend ein in einem oberen und einem mittleren Gehäusebereich (2a, 2c) eines Gehäuses (2) angeordnetes erstes Ventilsystem (10), mit einem pedalbetätigbaren oder elektrisch betätigbaren ersten Ventilkolben (3) sowie mit einem damit zusammenwirkenden ersten ringförmigen Plattenventil (14), sowie aufweisend ein in einem unteren Gehäusebereich (2b) des Gehäuses (2) angeordnetes zweites Ventilsystem (29), mit einem koaxial angeordneten, pneumatisch und/oder mechanisch durch das erste Ventilsystem (10) betätigbaren zweiten Ventilkolben (30), sowie mit einem damit zusammenwirkenden zweiten ringförmigen Plattenventil (37), wobei der obere Gehäusebereich (2a) einen vom oberen Gehäusebereich (2a) aus zugänglichen zylindrischen Raum (17, 17a) zur Aufnahme des ersten Ventilkolbens (3), der mittlere Gehäusebereich (2c) einen vom unteren Gehäusebereich (2b) aus zugänglichen Raum (19) zur Aufnahme des ersten Plattenventils (14) und der untere Gehäusebereich (2b) einen vom unteren Gehäusebereich (2b) aus zugänglichen Raum (49) zur Aufnahme des zweiten Ventilkolbens (30) und eine Vorrichtung zur Aufnahme des zweiten Plattenventils (37) aufweist, wobei das Gehäuse (2) einstückig und materialeinheitlich aus dem oberen Gehäusebereich (2a), dem mittleren Gehäusebereich (2c), dem unteren Gehäusebereich (2b) und einem im mittleren Gehäusebereich (2c) gehäusefest angeordneten ringförmigen Dichtsitz (16) besteht, dass der obere Gehäusebereich (2a) durch einen Gehäusedeckel (6) und der untere Gehäusebereich (2b) durch ein Abschlusselement (54) verschlossen sind, **dadurch gekennzeichnet, dass** wenigstens das Abschlusselement (54) mit einem Dichtsitzträger (52) und dem dazwischen angeordneten zweiten Plattenventil (37) zu einer vormontierten, in den Raum (49) im unteren Gehäusebereich (2b) einsetzbaren Baueinheit (37, 52, 54) zusammengefügt sind, und dass die in den Raum (49) im unteren Gehäusebereich (2b) einsetzbare Baueinheit (37, 52, 54) zusätzlich mit
dem zweiten Ventilkolben (30) zu einer erweiterten vormontierten Baueinheit (30, 37, 52, 54) zusammengefügt ist.

2. Regelventil nach Anspruch 1 , **dadurch gekennzeichnet, dass** die in den Raum (49) im unteren Gehäusebereich (2b) einsetzbare Baueinheit (37, 52, 54; 30, 37, 52, 54) zusätzlich mit einem Schalldämpfer (46) zu einer noch umfangreicher vormontierten Baueinheit (37, 46, 52, 54; 30, 37, 46, 52, 54) zusammengefügt ist.

3. Regelventil nach einem der Ansprüche 1 oder 2, **dadurch gekennzeichnet, dass** die Elemente (30, 37, 46, 52, 54) der vormontierten Baueinheit (30, 37, 52, 54), der erweiterten vormontierten Baueinheit (30, 37, 52, 54) oder der noch umfangreicher vormontierten Baueinheit (37, 46, 52, 54; 30, 37, 46, 52, 54) mittels Rastverbindungen (44, 54g, 57) zusammengefügt sind.

4. Regelventil nach einem der Ansprüche 1 bis 3, **dadurch gekennzeichnet, dass** das Abschlusselement (54) mittels einer Rastverbindung (54e) am unteren Gehäusebereich (2b) befestigt ist.

5. Regelventil nach Anspruch 3 oder 4, **dadurch gekennzeichnet, dass** wenigstens die Rastverbindung (54e) für das Abschlusselement (54) als Verbindungsmittel eines Bajonettverschlusses ausgebildet ist.

6. Regelventil nach einem der Ansprüche 3 bis 5, **dadurch gekennzeichnet, dass** das Abschlusselement (54) mittels eines Blattfederelements (55) gegenüber dem unteren Gehäusebereich (2b) positioniert und gegen ein Verdrehen gesichert ist.

7. Regelventil nach Anspruch 6, **dadurch gekennzeichnet, dass** das Blattfederelement (55) das Abschlusselement (54) bereichsweise umgreift, mit seinen radial nach innen abgebogenen Federenden (55a) in Schlitze (54c) im Abschlusselement (54) sowie mit einem mittleren, radial nach außen vorstehenden Positioniervorsprung (55b) federnd in eine entsprechende Positionierausnehmung (56) im unteren Gehäusebereich (2b) eingreift.

8. Regelventil nach einem der Ansprüche 1 bis 7, **dadurch gekennzeichnet, dass** der erste Ventilkolben (3) mit einer oberen Druckplatte (5), einer unteren Druckplatte (22) und einem dazwischen angeordneten Ventilfederpaket (4; 4a, 4b) mittels einer diese verbindenden Spannschraube (24) zu einer vormontierten, in den zylindrischen Raum (17, 17a) des oberen Gehäusebereichs (2a) einsetzbaren Baueinheit (3, 4, 5, 22) zusammenmontiert ist.

9. Fahrzeug, insbesondere Nutzfahrzeug, **gekennzeichnet durch** ein Regelventil (1) nach einem der Ansprüche 1 bis 8.

10. Verwendung eines Regelventils (1) nach einem der Ansprüche 1 bis 8 in einem Druckluftbremssystem eines Fahrzeugs.

## Claims

1. Pneumatic control valve (1), in particular dual-circuit brake transducer in a compressed air brake system of a vehicle for adjusting a brake pressure which corresponds to a desired brake action, having a first valve system (10) which is arranged in an upper and a middle housing region (2a, 2c) of a housing (2), with a first valve piston (3) which can be actuated by pedal or can be actuated electrically, and with a first annular plate valve (14) which interacts with the said first valve piston (3), and having a second valve system (29) which is arranged in a lower housing region (2b) of the housing (2), with a coaxially arranged second valve piston (30) which can be actuated pneumatically and/or mechanically by way of the first valve system (10), and with a second annular plate valve (37) which interacts with the said second valve piston (30), the upper housing region (2a) having a cylindrical space (17, 17a) which is accessible from the upper housing region (2a) for receiving the first valve piston (3), the middle housing region (2c) having a space (19) which is accessible from the lower housing region (2b) for receiving the first plate valve (14), and the lower housing region (2b) having a space (49) which is accessible from the lower housing region (2b) for receiving the second valve piston (30), and having an apparatus for receiving the second plate valve (37), the housing (2) consisting, in one piece and formed from the same material, of the upper housing region (2a), the middle housing region (2c), the lower housing region (2b), and an annular sealing seat (16) which is arranged in the middle housing region (2c) in a manner which is fixed to the housing, the upper housing region (2a) being closed by way of a housing cover (6), and the lower housing region (2b) being closed by way of a terminating element (54), **characterized in that** at least the terminating element (54) is joined to a sealing seat carrier (52) and the second plate valve (37) which is arranged in between to form a preassembled structural unit (37, 52, 54) which can be inserted into the space (49) in the lower housing region (2b), and **in that** the structural unit (37, 52, 54) which can be inserted into the space (49) in the lower housing region (2b) is additionally joined to the second valve piston (30) to form an extended preassembled structural unit (30, 37, 52, 54).

2. Control valve according to Claim 1, **characterized in that** the structural unit (37, 52, 54; 30, 37, 52, 54) which can be inserted into the space (49) in the lower housing region (2b) is additionally joined to a sound absorber (46) to form a structural unit (37, 46, 52, 54; 30, 37, 46, 52, 54) which is preassembled in an even more extensive manner.

3. Control valve according to either of Claims 1 and 2, **characterized in that** the elements (30, 37, 46, 52, 54) of the preassembled structural unit (30, 37, 52, 54), of the extended preassembled structural unit (30, 37, 52, 54) or of the structural unit (37, 46, 52, 54; 30, 37, 46, 52, 54) which is preassembled in an even more extensive manner are joined together by means of latching connections (44, 54g, 57).

4. Control valve according to one of Claims 1 to 3, **characterized in that** the terminating element (54) is fastened to the lower housing region (2b) by means of a latching connection (54e).

5. Control valve according to Claim 3 or 4, **characterized in that** at least the latching connection (54e) for the terminating element (54) is configured as a connecting means of a bayonet fitting.

6. Control valve according to one of Claims 3 to 5, **characterized in that** the terminating element (54) is positioned with respect to the lower housing region (2b) by means of a leaf spring element (55) and is secured against rotation.

7. Control valve according to Claim 6, **characterized in that** the leaf spring element (55) engages around the terminating element (54) in regions, and engages with its radially inwardly bent-away spring ends (55a) into slots (54c) in the terminating element (54) and engages in a sprung manner with a middle, radially outwardly projecting positioning projection (55b) into a corresponding positioning recess (56) in the lower housing region (2b).

8. Control valve according to one of Claims 1 to 7, **characterized in that** the first valve piston (3) is assembled with an upper pressure plate (5), a lower pressure plate (22) and a valve spring assembly (4; 4a, 4b) which is arranged in between by means of a clamping screw (24) which connects them to form a preassembled structural unit (3, 4, 5, 22) which can be inserted into the cylindrical space (17, 17a) of the upper housing region (2a).

9. Vehicle, in particular commercial vehicle, **characterized by** a control valve (1) according to one of Claims 1 to 8.

10. Use of a control valve (1) according to one of Claims 1 to 8 in a compressed air brake system of a vehicle.

## Revendications

1. Soupape de régulation pneumatique (1), en particulier transducteur de valeur de freinage à deux circuits dans un système de frein à air comprimé d'un véhicule pour la régulation d'une pression de freinage correspondant à un effet de freinage souhaité, présentant un premier système de soupape (10) disposé dans une région de boîtier supérieure et une région de boîtier centrale (2a, 2c) d'un boîtier (2), avec un premier piston de soupape (3) pouvant être actionné électriquement ou par une pédale ainsi qu'avec une première soupape à plaque annulaire (14) coopérant avec celui-ci, et présentant un deuxième système de soupape (29) disposé dans une région de boîtier inférieure (2b) du boîtier (2), avec un deuxième piston de soupape (30) disposé coaxialement, pouvant être actionné pneumatiquement et/ou mécaniquement par le premier système de soupape (10), ainsi qu'avec une deuxième soupape à plaque annulaire (37) coopérant avec celui-ci, la région de boîtier supérieure (2a) présentant un espace cylindrique (17, 17a) accessible à partir de la région de boîtier supérieure (2a) pour recevoir le premier piston de soupape (3), la région de boîtier centrale (2c) présentant un espace (19) accessible depuis la région de boîtier inférieure (2b) pour recevoir la première soupape à plaque (14) et la région de boîtier inférieure (2b) présentant un espace (49) accessible depuis la région de boîtier inférieure (2b) pour recevoir le deuxième piston de soupape (30) et un dispositif pour recevoir la deuxième soupape à plaque (37), le boîtier (2) se composant, d'une seule pièce et dans le même matériau, de la région de boîtier supérieure (2a), de la région de boîtier centrale (2c), de la région de boîtier inférieure (2b) et d'un siège d'étanchéité (16) annulaire disposé dans la région de boîtier centrale (2c) de manière fixée au boîtier, en ce que la région de boîtier supérieure (2a) est fermée par un couvercle de boîtier (6) et la région de boîtier inférieure (2b) étant fermée par un élément de fermeture (54), **caractérisée en ce qu'**au moins l'élément de fermeture (54) avec un support de siège d'étanchéité (52) et la deuxième soupape à plaque (37) disposée entre eux sont assemblés pour former une unité structurelle (37, 52, 54) prémontée, pouvant être insérée dans l'espace (49) dans la région de boîtier inférieure (2b), et **en ce que** l'unité structurelle (37, 52, 54) pouvant être insérée dans l'espace (49) dans la région de boîtier inférieure (2b) est en outre assemblée avec le deuxième piston de soupape (30) pour former une unité structurelle prémontée élargie (30, 37, 52, 54).

2. Soupape de régulation selon la revendication 1, **caractérisée en ce que** l'unité structurelle (37, 52, 54 ; 30, 37, 52, 54) pouvant être insérée dans l'espace (49) dans la région de boîtier inférieure (2b) est en outre assemblée avec un silencieux (46) pour former une unité structurelle prémontée encore plus grande (37, 46, 52, 54 ; 30, 37, 46, 52, 54) .

3. Soupape de régulation selon l'une quelconque des revendications 1 ou 2, **caractérisée en ce que** les éléments (30, 37, 46, 52, 54) de l'unité structurelle prémontée (30, 37, 52, 54), de l'unité structurelle prémontée élargie (30, 37, 52, 54) ou de l'unité structurelle prémontée encore plus grande (37, 46, 52, 54 ; 30, 37, 46, 52, 54) sont assemblés au moyen de connexions par encliquetage (44, 54g, 57).

4. Soupape de régulation selon l'une quelconque des revendications 1 à 3, **caractérisée en ce que** l'élément de fermeture (54) est fixé au moyen d'une connexion par encliquetage (54e) à la région de boîtier inférieure (2b).

5. Soupape de régulation selon la revendication 3 ou 4, **caractérisée en ce qu'**au moins la connexion par encliquetage (54e) pour l'élément de fermeture (54) est réalisée en tant que moyen de connexion d'une fermeture à baïonnette.

6. Soupape de régulation selon l'une quelconque des revendications 3 à 5, **caractérisée en ce que** l'élément de fermeture (54) est positionné au moyen d'un élément de ressort à lame (55) par rapport à la région de boîtier inférieure (2b) et est immobilisé en rotation.

7. Soupape de régulation selon la revendication 6, **caractérisée en ce que** l'élément de ressort à lame (55) vient en prise en partie autour de l'élément de fermeture (54), et s'engage avec ses extrémités de ressort courbées radialement vers l'intérieur (55a) dans des fentes (54c) dans l'élément de fermeture (54), ainsi qu'avec une saillie de positionnement centrale (55b) faisant saillie radialement vers l'extérieur, de manière élastique dans un logement de positionnement correspondant (56) dans la région de boîtier inférieure (2b).

8. Soupape de régulation selon l'une quelconque des revendications 1 à 7, **caractérisée en ce que** le premier piston de soupape (3) est monté avec une plaque de pression supérieure (5), une plaque de pression inférieure (22) et un paquet de ressorts de soupape disposé entre elles (4 ; 4a, 4b) au moyen d'une vis de serrage (24) les reliant, pour former une unité structurelle prémontée (3, 4, 5, 22) pouvant être insérée dans l'espace cylindrique (17, 17a) de la région de boîtier supérieure (2a).

9. Véhicule, en particulier véhicule utilitaire, **caractérisé par** une soupape de régulation (1) selon l'une quelconque des revendications 1 à 8.

10. Utilisation d'une soupape de régulation (1) selon l'une quelconque des revendications 1 à 8, dans un système de frein à air comprimé d'un véhicule.
